# EUROPEAN PATENT APPLICATION

(11) **EP 4 228 332 A1**
(43) Date of publication of application: **16.08.2023**
(21) Application number: 20956751.0
(22) Date of filing: 08.10.2020
(51) Int. Cl.: H04W 52/02

(54) **BASE STATION DEVICE, TERMINAL STATION DEVICE, WIRELESS COMMUNICATION SYSTEM, AND WIRELESS COMMUNICATION METHOD**

(71) Applicant: FUJITSU LIMITED, Kawasaki-shi, Kanagawa 211-8588 (JP)
(72) Inventor: OHTA, Yoshiaki, Kawasaki-shi, Kanagawa 211-8588 (JP)
(74) Representative: Haseltine Lake Kempner LLP
(86) International application number: PCT/JP2020/038202
(87) International publication number: WO 2022/074804

(57) **Abstract**

To improve the efficiency of data communication performed in a RRC inactive mode. To solve this problem, a terminal station device (200) includes a transmitter (210) that is able to perform communication with a base station device (100) associated with the terminal station device (200) when the terminal station device (200) is in a predetermined state; and a controller (220) that receives, regarding setting that is related to a region in which a control signal for the communication is decoded and that is related to a duration in which the region becomes available, setting of, performed by the base station device, a duration that corresponds to first communication and a duration that corresponds to second communication out of the communication, and that is able to control the communication performed by intermittently using each of the sections in accordance with a state of data communication to be performed.

## Description

### Technical Field

The present invention relates to a base station device, a terminal station device, a wireless communication system, and a wireless communication method.

### Background Art

In the current networks, traffic of mobile terminals (smartphones and feature phones) occupies most of network resources. Furthermore, traffic used by mobile terminals tends to be continuously increased in the future.

In contrast, with the development of Internet of things (IoT) services (for example, monitoring systems, such as transportation systems, smart meters, and devices), there is a need to cope with services having various request conditions. Accordingly, in the communication standards for the fifth generation mobile unit communication (5G or New Radio (NR)), in addition to the standard technology of the fourth generation mobile unit communication (4G) (for example, Non Patent Literatures 1 to 13), there is a demand for a technology that implements higher-data-rate, higher-capacity, and lower-delay communication.

Furthermore, regarding the fifth generation communication standard, technical studies are being conducted in the Third Generation Partnership Project (3GPP) working groups (for example, TSG-R_AN WG1, TSG-R_AN WG2, etc.).

Incidentally, in general, in a wireless communication system, a process of a radio resource control (RRC) layer is performed. In the process performed in the RRC layer, setting, a change, release, or the like of a connection is performed between, for example, a base station device and a terminal station device. For example, in Long Term Evolution (LTE) or LTE-Advanced (LTE-A) that is the standard technology of 4G, a RRC connected mode (RRC_CONNECTED) and a RRC idle mode (RRC_IDLE) are stipulated as a state of the RRC layer. The RRC connected mode is a mode in which data communication is able to perform between, for example, the base station device and the terminal station device. The RRC idle mode is a mode in which data communication is not performed between, for example, the base station device and the terminal station device, and is a mode in which the terminal station device enters an electric power saving state.

In 5G, in addition to the RRC connected mode and the RRC idle mode, studies have been conducted on introducing a RRC inactive mode (RRC_INACTIVE). The RRC inactive mode is a mode that is able to be rapidly transitioned to the RRC connected mode at the time of data transmission and that is a low electric power consumption mode similar to the RRC idle mode. In the RRC inactive mode, information on the data communication with the terminal station device is held in the base station device. The information on the data communication includes information on a location of the terminal station device, communication capacity, various parameters, an identifier of the terminal station device (terminal ID), and the like. In this way, the information on the data communication is held in the base station device, so that, even if the RRC inactive mode is used, it is considered by a core network that the terminal station device is being connected to the base station device. As a result, when the terminal station device returns from the RRC inactive mode to the RRC connected mode, transmission and reception of a signal between the base station device and the core network are omitted, a prompt transition to the RRC connected mode is implemented.

### Citation List

### Patent Literature

Non Patent Literature 1: 3GPP TS 36.133 V16.6.0 (2020-06)
Non Patent Literature 2: 3GPP TS 36.211 V16.2.0 (2020-06)
Non Patent Literature 3: 3GPP TS 36.212 V16.2.0 (2020-06)
Non Patent Literature 4: 3GPP TS 36.213 V16.2.0 (2020-06)
Non Patent Literature 5: 3GPP TS 36.214 V16.1.0 (2020-06)
Non Patent Literature 6: 3GPP TS 36.300 V16.2.0 (2020-07)
Non Patent Literature 7: 3GPP TS 36.321 V16.1.0 (2020-07)
Non Patent Literature 8: 3GPP TS 36.322 V16.0.0 (2020-07)
Non Patent Literature 9: 3GPP TS 36.323 V16.1.0 (2020-07)
Non Patent Literature 10: 3GPP TS 36.331 V16.1.1 (2020-07)
Non Patent Literature 11: 3GPP TS 36.413 V16.2.0 (2020-07)
Non Patent Literature 12: 3GPP TS 36.423 V16.2.0 (2020-07)
Non Patent Literature 13: 3GPP TS 36.425 V16.0.0 (2020-07)
Non Patent Literature 14: 3GPP TS 37.324 V16.1.0 (2020-07)
Non Patent Literature 15: 3GPP TS 37.340 V16.2.0 (2020-07)
Non Patent Literature 16: 3GPP TS 38.201 V16.0.0 (2019-12)
Non Patent Literature 17: 3GPP TS 38.202 V16.1.0 (2020-06)
Non Patent Literature 18: 3GPP TS 38.211 V16.2.0 (2020-06)
Non Patent Literature 19: 3GPP TS 38.212 V16.2.0 (2020-06)
Non Patent Literature 20: 3GPP TS 38.213 V16.2.0 (2020-06)
Non Patent Literature 21: 3GPP TS 38.214 V16.2.0 (2020-06)
Non Patent Literature 22: 3GPP TS 38.215 V16.2.0 (2020-06)
Non Patent Literature 23: 3GPP TS 38.300 V16.2.0 (2020-07)
Non Patent Literature 24: 3GPP TS 38.321 V16.1.0 (2020-07)
Non Patent Literature 25: 3GPP TS 38.322 V16.1.0 (2020-07)
Non Patent Literature 26: 3GPP TS 38.323 V16.1.0 (2020-07)
Non Patent Literature 27: 3GPP TS 38.331 V16.1.0 (2020-07)
Non Patent Literature 28: 3GPP TS 38.401 V16.2.0 (2020-07)
Non Patent Literature 29: 3GPP TS 38.410 V16.2.0 (2020-07)
Non Patent Literature 30: 3GPP TS 38.413 V16.2.0 (2020-07)
Non Patent Literature 31: 3GPP TS 38.420 V16.0.0 (2020-07)
Non Patent Literature 32: 3GPP TS 38.423 V16.2.0 (2020-07)
Non Patent Literature 33: 3GPP TS 38.470 V16.2.0 (2020-07)
Non Patent Literature 34: 3GPP TS 38.473 V16.2.0 (2020-07)
Non Patent Literature 35: 3GPP TR 38.801 V14.0.0 (2017-03)
Non Patent Literature 36: 3GPP TR 38.802 V14.2.0 (2017-09)
Non Patent Literature 37: 3GPP TR 38.803 V14.2.0 (2017-09)
Non Patent Literature 38: 3GPP TR 38.804 V14.0.0 (2017-03)
Non Patent Literature 39: 3GPP TR 38.900 V15.0.0 (2018-06)
Non Patent Literature 40: 3GPP TR 38.912 V15.0.0 (2018-06)
Non Patent Literature 41: 3GPP TR 38.913 V15.0.0 (2018-06)

### Summary of invention

### Technical Problem

The RRC inactive mode is a mode in which data communication except for data communication that is completely indispensable for performing or maintaining communication between the base station device and the terminal station device is not performed; however, in recent years, studies have been conducted on implementing transmission of data (for example, small data) performed in during the RRC inactive mode. In other words, for example, it is conceivable that small data, such as failure information on the terminal station device or a measurement value obtained by a sensor, is transmitted from the terminal station device to the base station device during the RRC inactive mode.

Regarding transmission of the small data, studies have been conducted on using one of a RACH method that uses a random access and a configured grant (CG) method that uses a radio resource that is set in advance. In the RACH, the terminal station device transmits, to the base station device, a message and so on including a preamble, similarly to the random access performed at the time at which synchronization is established with the base station device; however, the small data is included in one of these messages and is transmitted. In contrast, in the CG method, in the terminal station device, the radio resource to be used for transmission is set in advance by the base station device, and, if small data is generated, the small data is transmitted by using the radio resource that is set in advance.

However, there is a problem in that control is inefficient in the data communication performed in the RRC inactive mode. Specifically, in the RRC inactive mode, the terminal station device enters an electric power saving state by turning off an electric power supply to the wireless communication unit except for a completely indispensable case; however, for example, a changeover of the electric power supply to be turned on or off is accordingly generated in a short period of time in accordance with the transmission of the small data.

For example, in the case where the small data is transmitted from the terminal station device during the RRC inactive mode, the terminal station device turned on the electric power supply to the wireless receiving circuit in order to receive a control channel (for example, a physical downlink control channel (PDCCH)) that performs control of retransmission of data corresponding to the small data. Furthermore, the electric power supply to the wireless receiving circuit is turned on in order to receive ACK of, for example, a transmission control protocol (TCP), a status report of a radio link control (RLC) layer, or the like. In addition, during the RRC inactive mode, the terminal station device receives a periodical paging signal by a paging frame, and checks whether downlink data sent from the base station device is present.

In this way, during the RRC inactive mode for which the electric power supply to the wireless receiving circuit is turned off, the electric power supply to the wireless receiving circuit is frequently turned on, a changeover of on and off is generated in a short period of time and the efficiency of control is decreased.

Accordingly, the present technology has been conceived in light of the circumstances described above and an object thereof is to provide a base station device, a terminal station device, a wireless communication system, and a wireless communication method capable of improving the efficiency of data communication during a RRC inactive mode.

### Solution to Problem

According to an aspect of an embodiment, A base station device includes a transmitter configured to perform communication when a terminal station device associated with the base station device is in a predetermined state, and a controller configure, regarding setting that is related to a region in which a control signal for the communication performed by the terminal station device is decoded and that is related to a duration in which the region becomes available, a duration that corresponds to first communication and a duration that corresponds to second communication out of the communication, and control the terminal station device so as to cause the terminal station device to perform the communication by intermittently using each of the durations.

### Advantageous Effects of Invention

According to an aspect of an embodiment of the base station device, the terminal station device, the wireless communication system, and the wireless communication method disclosed in the present invention, an advantage is provided in that it is possible to improve the efficiency of data communication during the RRC inactive mode.

### Brief Description of Drawings

FIG. 1 is a block diagram illustrating a structure of a base station device according to a first embodiment.
FIG. 2 is a block diagram illustrating a structure of a terminal station device according to the first embodiment.
FIG. 3 is a sequence diagram illustrating an example of a wireless communication method.
FIG. 4 is a sequence diagram illustrating another example of the wireless communication method.
FIG. 5 is a sequence diagram illustrating an example of a small data transmission method.
FIG. 6 is a sequence diagram illustrating a specific example of a wireless communication method according to a second embodiment.
FIG. 7 is a sequence diagram illustrating another specific example of the wireless communication method according to the second embodiment.
FIG. 8 is a sequence diagram illustrating still another specific example of the wireless communication method according to the second embodiment.
FIG. 9 is a sequence diagram illustrating a specific example of a wireless communication method according to a third embodiment.
FIG. 10 is a sequence diagram illustrating another specific example of the wireless communication method according to the third embodiment.
FIG. 11 is a sequence diagram illustrating still another specific example of the wireless communication method according to the third embodiment.
FIG. 12 is a sequence diagram illustrating a specific example of a wireless communication method according to a fourth embodiment.
FIG. 13 is a sequence diagram illustrating another specific example of the wireless communication method according to the fourth embodiment.

### [Description of Embodiments] (DESCRIPTION OF EMBODIMENTS)

Preferred embodiments of a base station device, a terminal station device, a wireless communication system, and a wireless communication method disclosed in the present invention will be explained in detail with reference to accompanying drawings. The present invention is not limited to the embodiments.

### First Embodiment

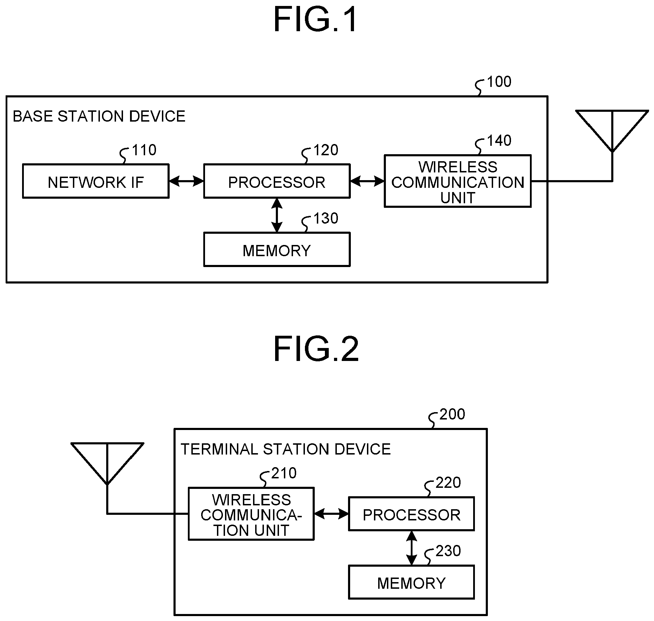

FIG. 1 is a block diagram illustrating a structure of a base station device 100 according to a first embodiment. The base station device 100 illustrated in FIG. 1 includes a network interface (hereinafter, simply referred to as a "network IF") 110, a processor 120, a memory 130, and a wireless communication unit 140.

The network IF 110 is connected to a core network (not illustrated) in a wired manner, and transmits and receives a signal to and from a device constituting a core network.

The processor 120 is a control unit that includes, for example, a central processing unit (CPU), a field programmable gate array (FPGA), a digital signal processor (DSP), or the like, and that performs overall control of the base station device 100. Furthermore, the processor 120 performs configuring that is related to a region of a radio resource in which the terminal station device associated with the base station device 100 decodes a control signal used for performing communication and that is related to a time duration in which the region becomes available in the terminal station device. Specifically, the processor 120 configures, for example, a duration that corresponds to first communication to be performed by the terminal station device and a duration that corresponds to second communication to be performed by the terminal station device, and controls the terminal station device so as to cause the terminal station device to perform communication by intermittently using each of the durations. In addition, by transmitting control information via the wireless communication unit 140, the processor 120 notifies the terminal station device of the information on the setting of the above described durations and controls the communication that is performed by the terminal station device.

The memory 130 includes, for example, a random access memory (RAM), a read only memory (ROM), or the like, and stores therein information that is used by a process performed by the processor 120.

The wireless communication unit 140 performs wireless communication with a terminal station device that is associated with the base station device 100. The wireless communication unit 140 transmits the control information including information on, for example, setting of a duration to the terminal station device. Furthermore, the wireless communication unit 140 receives data transmitted from the terminal station device. In addition, the wireless communication unit 140 is also able to perform communication with the associated terminal station device when the associated terminal station device is transitioned to a predetermined state.

FIG. 2 is a block diagram illustrating a structure of a terminal station device 200 according to the first embodiment. The terminal station device 200 illustrated in FIG. 2 includes a wireless communication unit 210, a processor 220, and a memory 230.

The wireless communication unit 210 performs wireless communication with the base station device 100 that is associated with the terminal station device 200. The wireless communication unit 210 receives, from the base station device 100, control information including information on setting of a time duration in which a region of the radio resource used for decoding, for example, the control signal becomes available. Furthermore, the wireless communication unit 210 transmits, for example, small data to the base station device 100. In addition, the wireless communication unit 210 is also able to perform communication with the base station device 100 when the terminal station device 200 is transitioned to a predetermined state.

The processor 220 is a control unit that includes, for example, a CPU, an FPGA, a DSP, or the like, and that performs overall control of the entire of the terminal station device 200. Furthermore, the processor 220 receives, from the base station device 100, setting that is related to a region of the radio resource in which the terminal station device 200 decodes a control signal used for performing communication and that is related to a time duration in which the region becomes available. Specifically, the processor 220 receives setting of a duration that corresponds to the first communication performed by the terminal station device 200 and a duration that corresponds to the second communication performed by the terminal station device 200, and controls the communication performed by intermittently using each of the durations. At this time, the processor 220 performs control of the communication in accordance with the state of the data communication that is being performed.

The memory 230 includes, for example, a RAM, a ROM, or the like, and stores therein information that is used for a process performed by the processor 220.

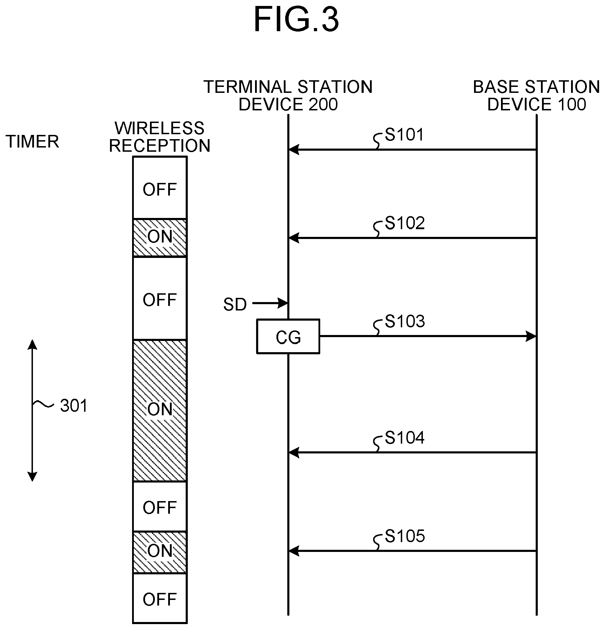

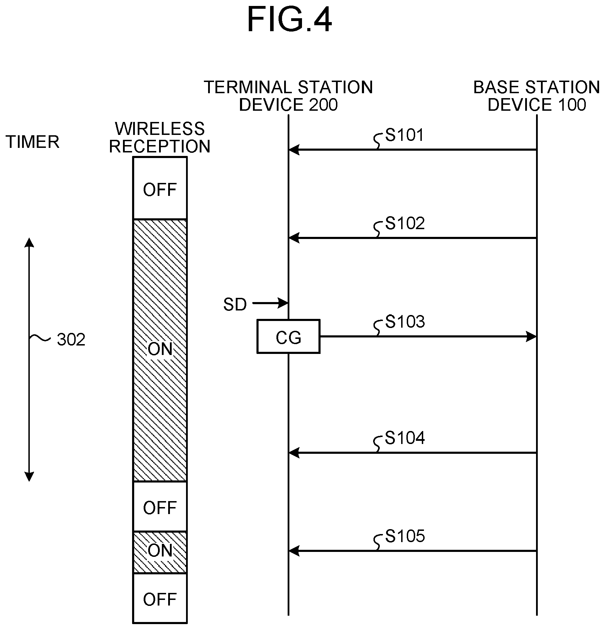

In the following, a wireless communication method performed by the base station device 100 and the terminal station device 200 that are configured as described above will be described with reference to FIGS. 3 and 4.

FIG. 3 is a sequence diagram illustrating an example of the wireless communication method. Here, it is assumed that the terminal station device 200 has been transitioned to a predetermined state that enters a low electric power consumption state as a result of a decrease in an electric power supply to the wireless communication unit 210. In FIG. 3, time durations in each of which the wireless receiving circuit included in the wireless communication unit 210 is turned on or off are illustrated. As illustrated in FIG. 3, the base station device 100 transmits the control information including the information (hereinafter, referred to as "duration configuring information") on the setting of the duration that corresponds to the first communication performed by the terminal station device 200 and the duration that corresponds to the second communication performed by the terminal station device 200 (Step S101).

When the terminal station device 200 receives the duration configuring information, the terminal station device 200 turns on the wireless receiving circuit in the duration that corresponds to the first communication, and receives the control signal related to the first communication from the base station device 100 (Step S102). Then, the terminal station device 200 turns off the wireless receiving circuit after an elapse of the duration that corresponds to the first communication.

After that, if small data SD to be transmitted from the terminal station device 200 is generated, the terminal station device 200 uses a radio resource CG that has been set in advance by the base station device 100, and performs the second communication in which the small data SD is transmitted to the base station device 100 (Step S103). Furthermore, the terminal station device 200 starts a timer 301 that corresponds to the second communication in accordance with the duration configuring information, and turns on the wireless receiving circuit in the duration that is continued until the timer 301 is expired.

The base station device 100 that receives the small data SD from the terminal station device 200 transmits the control signal to the terminal station device 200 in accordance with the small data SD (Step S104). The terminal station device 200 turns on the wireless receiving circuit in the duration that is continued until the timer 301 is expired, so that the terminal station device 200 is able to receive the control signal at Step S104. Then, when the timer 301 has been expired, the terminal station device 200 turns off the wireless receiving circuit.

In addition, the first communication may be periodically performed. After that, the terminal station device 200 turns on the wireless receiving circuit in the duration that corresponds to the first communication that is periodically performed, and receives the control signal related to the first communication from the base station device 100 (Step S105). Then, the terminal station device 200 turns off the wireless receiving circuit after an elapse of the duration corresponding to the first communication.

In this way, the terminal station device 200 controls the duration during which the wireless receiving circuit is being turned on in accordance with the setting performed by the base station device 100, so that the terminal station device 200 is able to receive the control signal that is in accordance with the transmission of the small data SD, is able to minimize the frequency in switching of on and off of the wireless receiving circuit, and is thus able to improve the efficiency of the data communication.

FIG. 4 is a sequence diagram illustrating another example of the wireless communication method. In FIG. 4, components that are the same as those illustrated in FIG. 3 are assigned the same reference numerals. In also FIG. 4, it is assumed that the terminal station device 200 is transitioned to a predetermined state that enters the low electric power consumption state as a result of a decrease in an electric power supply to the wireless communication unit 210. As illustrated in FIG. 4, the base station device 100 transmits the control information including the duration setting information (Step S101).

When the terminal station device 200 receives the duration configuring information, the terminal station device 200 turns on the wireless receiving circuit in the duration corresponding to the first communication, and receives the control signal related to the first communication from the base station device 100 (Step S102). Furthermore, the terminal station device 200 starts a timer 302 in accordance with the duration setting information, and turns on the wireless receiving circuit in the duration that is continued until the timer 302 is expired.

After that, if the small data SD to be transmitted from the terminal station device 200 is generated, the terminal station device 200 uses the radio resource CG that has been set by the base station device 100 in advance, and performs the second communication in which the small data SD is transmitted to the base station device 100 (Step S103).

The base station device 100 that receives the small data SD from the terminal station device 200 transmits the control signal to the terminal station device 200 in accordance with the small data SD (Step S104). The terminal station device 200 turns on the wireless receiving circuit in the duration during which the timer 302 has been expired, so that the terminal station device 200 is able to receive the control signal at Step S104. Then, when the timer 302 has been expired, the terminal station device 200 turns off the wireless receiving circuit.

After that, the terminal station device 200 turns on the wireless receiving circuit in the duration corresponding to the first communication, and receives the control signal related to the first communication from the base station device 100 (Step S105). Then, the terminal station device 200 turns off the wireless receiving circuit after an elapse of the duration corresponding to the first communication.

In the example illustrated in FIG. 4, the first communication may be periodical communication and the radio resource CG may be a periodical resource. Specifically, the period of the first communication that is periodically performed and the period of the radio resource CG that is periodically performed are a length of time in correspondence to each other. Then, the timer 302 is set to be expired in a predetermined period of time in accordance with these periods.

In this way, in accordance with the setting performed by the base station device 100, the wireless receiving circuit is continuously turned on in the duration that corresponds to the first communication and the duration that corresponds to the second communication that is related to the small data SD, so that the terminal station device 200 is able to receive the control signal that is in accordance with the transmission of the small data SD, is able to minimize the frequency in switching of on and off of the wireless receiving circuit, and is thus able to improve the efficiency of the data communication.

As described above, according to the present embodiment, the terminal station device controls the duration during which the wireless receiving circuit is being turned on and intermittently performs communication in accordance with the setting performed by the base station device, so that the terminal station device is able to receive the control signal that is in accordance with the transmission of the small data, is able to minimize the frequency in switching of on and off of the wireless receiving circuit, and is thus able to improve the efficiency of the data communication.

In addition, in the first embodiment described above, as one example, the first communication that is periodically performed may be transmission and reception of, for example, a paging signal, or the second communication may be transmission and reception of, for example, the small data. Furthermore, the control signal that is related to the second communication received by the terminal station device 200 may be transmitted by using, for example, a control channel, such as a PDCCH. In this case, a region of a radio resource specific to each of the terminal station devices 200 (i.e., a search space specific to a terminal (UE-specific Search Space: USS)) may be set to the control channel. In addition, in the example illustrated in FIG. 4, it is assumed that the period of the first communication and the period of the radio resource CG that is periodically performed are a length of time in correspondence to each other. Specifically, for example, in the case where a subcarrier interval is 15 KHz, the period of the radio resource CG that is periodically performed may be defined as 320 ms*14symbol*N (N=1, 2, 3, and 4).

### Second Embodiment

Incidentally, in a wireless communication system that uses frequency range 2 (FR2) including frequency bands at, for example, a millimeter waveband, studies are being conducted on a method in which the base station device expands a cell by forming beams in a plurality of directions and the terminal station device performs communication with the base station device by selecting a beam having large reception power. In this case, in the case where the terminal station device transmits the small data by using the CG method that uses, for example, a radio resource that has been set in advance, the terminal station device consequently transmits the small data by using the radio resource that has been set before an optimum beam is selected.

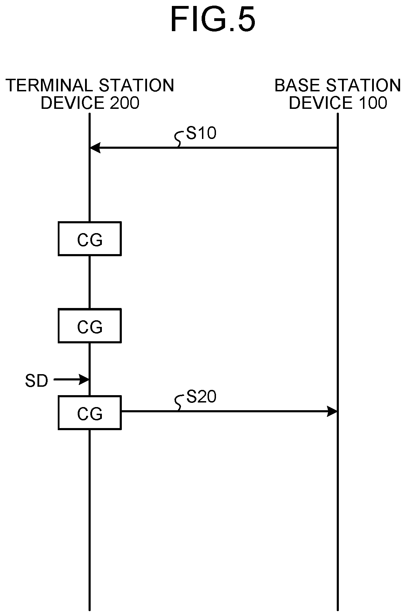

Specifically, for example, as illustrated in FIG. 5, the base station device 100 configures the radio resource CG that is able to be used by the terminal station device 200 to transmit the small data SD on the basis of, for example, notification information, such as a Master Information Block (MIB) or a System Information Block System Information Block (System Information Block), or individual control information on the RRC layer (Step S10). The terminal station device 200 sets the radio resource CG in accordance with notification information or the individual control information received from the base station device 100, and transmits, if the small data SD is generated, the small data SD by using the radio resource CG arrived at a timing immediately after the small data SD has been generated (Step S20). At this time, the terminal station device 200 selects the beam that is used to transmit the small data SD from among the plurality of beams that are formed by the base station device 100; however, the radio resource CG has already been set in advance, and thus, selection of the beam is limited to some extend by a certain amount. Furthermore, there is a possibility that a relatively long period of time has elapsed by the time the terminal station device 200 transmits the small data SD after the radio resource CG has been set, and there may be a case in which the terminal station device 200 moves in the period of time. Accordingly, the radio resource CG that is used for the transmission of the small data SD is not always an optimum radio resource.

Thus, in the second embodiment, a case in which the efficiency of the data communication is improved by using the optimum beam and the radio resource will be described. In particular, in the second embodiment, a case in which the radio resource CG that is used to transmit the small data SD is set by using a random access procedure performed by using four steps will be described.

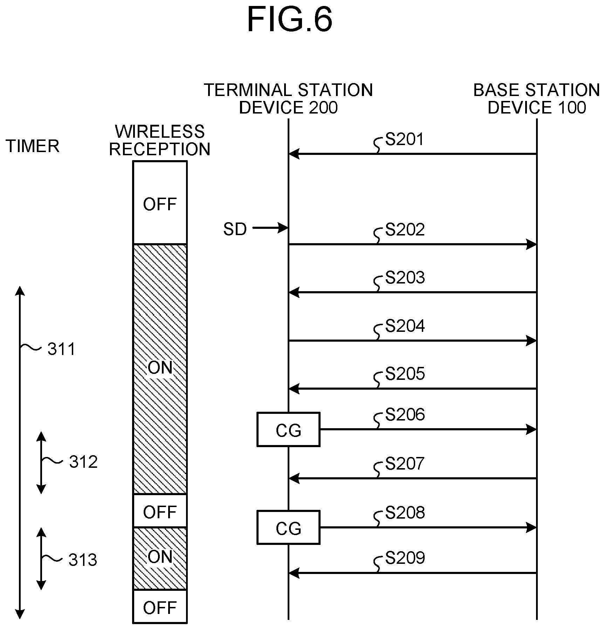

The configuration of the base station device 100 and the terminal station device 200 according to the second embodiment is the same as the structure of the base station device 100 (FIG. 1) and the terminal station device 200 (FIG. 2) according to the first embodiment. FIG. 6 is a sequence diagram illustrating a specific example of the wireless communication method according to the second embodiment. Here, it is assumed that the terminal station device 200 is transitioned to the RRC inactive mode that enters the low electric power consumption state as a result of a decrease in the electric power supply to the wireless communication unit 210. In FIG. 6, time durations in each of which the wireless receiving circuit included in the wireless communication unit 210 is turned on or off is illustrated.

The base station device 100 transmits the control information including the duration setting information on the setting of a duration that corresponds to a paging frame and a duration that corresponds to communication of the small data (Step S201). The duration configuring information may include, for example, information on time at which the paging frame is provided, information on setting time of a timer that is started at the time of transmission of the small data, or the like. In addition, as the control information including the duration configuring information, for example, notification information on a MIB, a SIB, or the like, or individual control information on the RRC layer is used.

When the terminal station device 200 receives the duration configuring information, the terminal station device 200 turns on the wireless receiving circuit in the duration that corresponds to, for example, the paging frame, and receives the control signal, such as the PDCCH, related to the paging from the base station device 100. Then, the terminal station device 200 turns off the wireless receiving circuit after an elapse of the duration that corresponds to the paging frame.

After that, if the small data SD to be transmitted from the terminal station device 200 is generated, the terminal station device 200 selects an optimum beam from among the plurality of beams that are formed by the base station device 100, and transmits a message (MSG1) including a preamble that corresponds to the selected beam to the base station device 100 (Step S202). The terminal station device 200 turns on the wireless receiving circuit in order to receive the message that corresponds to the MSG1 after the MSG1 has been transmitted.

The base station device 100 that receives the MSG1 determines a timing advance value (hereinafter, referred to as a "TA value") used for adjusting a transmission timing of the terminal station device 200, and allocates a Temporary Cell-Radio Network Temporary Identifier (C-RNTI) that is a temporary identifier to the terminal station device 200. Then, the base station device 100 transmits a message (MSG2) including the TA value and the Temporary C-RNTI to the terminal station device 200 (Step S203).

The terminal station device 200 that receives the MSG2 including the TA value determines that synchronization of an uplink has been established, and starts a time alignment timer 311 that defines synchronization duration time used in the uplink. After that, the processor 220 included in the terminal station device 200 is able to arbitrarily perform setting on and off the wireless receiving circuit until the time alignment timer 311 is expired. Furthermore, the terminal station device 200 holds the Temporary C-RNTI included in the MSG2 until the time alignment timer 311 is expired.

Then, the terminal station device 200 transmits a message (MSG3) corresponding to a RRC Resume Request to the base station device 100 (Step S204). At this time, the terminal station device 200 may include some of the small data SD into the MSG3 and transmit the MSG3. The base station device 100 that receives the MSG3 determines the radio resource CG that is used for transmission of the small data SD performed by the terminal station device 200, and then transmits a message (MSG4) including the setting information on the radio resource CG to the terminal station device 200 (Step S205). In addition, the MSG4 corresponds to RRC Release w/suspendConfig. Here, the radio resource CG is determined in a state in which an optimum beam has been selected by the terminal station device 200, so that an optimum radio resource CG is set. The radio resource CG may be set in a plurality of time domains.

After the terminal station device 200 has received the MSG4, the terminal station device 200 transmits some of the small data SD to the base station device 100 by using the radio resource CG (Step S206). Furthermore, the terminal station device 200 starts a timer 312 related to the communication of the small data SD in accordance with the duration setting information received at Step S201, and turns on the wireless receiving circuit included in the duration that is continued until the timer 312 is expired. In addition, here, it is assumed that, at Step S201, the duration setting information on the timer or the like is received; however, the duration setting information on the timer related to the radio resource CG or the like may be received at Step S205.

The base station device 100 that receives the small data SD from the terminal station device 200 transmits the control signal related to the PDCCH in accordance with the small data SD (Step S207). At this time, the base station device 100 transmits the PDCCH by masking in accordance with the value of Temporary C-RNTI that is included in the MSG2. The terminal station device 200 turns on the wireless receiving circuit in a duration that is continued until the timer 312 is expired, so that the terminal station device 200 is able to receive the control signal related to the PDCCH at Step S207. Furthermore, the terminal station device 200 holds the Temporary C-RNTI notified by the MSG2, so that the terminal station device 200 is able to decode the control signal that has been masked in accordance with the value of the Temporary C-RNTI. Then, when the timer 312 has been expired, the terminal station device 200 turns off the wireless receiving circuit.

After that, the terminal station device 200 transmits some of the rest of the small data SD to the base station device 100 by using the subsequent radio resource CG (Step S208). Furthermore, the terminal station device 200 starts a timer 313 related to communication of the small data SD in accordance with the duration configuring information that has been received at Step S201, and turns on the wireless receiving circuit in the duration that is continued until the timer 312 is expired.

The base station device 100 that receives the small data SD from the terminal station device 200 transmits the control signal related to the PDCCH in accordance with the small data SD (Step S209). At this time, the base station device 100 masks the PDCCH in accordance with the value of the Temporary C-RNTI included in the MSG2 and transmits the PDCCH. The terminal station device 200 turns on the wireless receiving circuit in the duration that is continued until the timer 312 is expired, the terminal station device 200 is able to receive the control signal related to the PDCCH at Step S209. Furthermore, the terminal station device 200 holds the Temporary C-RNTI notified by the MSG2, so that the terminal station device 200 is able to decode the control signal that has been masked in accordance with the value of the Temporary C-RNTI. Then, when the timer 313 has been expired, the terminal station device 200 turns off the wireless receiving circuit.

In this way, in the example illustrated in FIG. 6, the timers 312 and 313 are started every time the small data SD is transmitted by using the radio resource CG, and the duration for which the wireless receiving circuit is being turned on is continued until the timers 312 and 313 are expired. Consequently, the terminal station device 200 is able to reliably receive the control signal related to the PDCCH with respect to the small data SD even if the terminal station device 200 is in the RRC inactive mode.

In addition, here, it is assumed that the small data SD is transmitted by using the radio resource CG twice; however, the radio resource CG may be set three times or more, and the small data SD may be transmitted by using each of the radio resources CG. Furthermore, if it is possible to transmit the small data SD by using the radio resource CG one time, there is no need to transmit the small data SD at Step S208. In this case, instead of the small data SD, it may be possible to transmit, for example, buffer status information (i.e., a buffer status report: BSR) indicating the status of the buffer in the terminal station device 200 by using the radio resource CG.

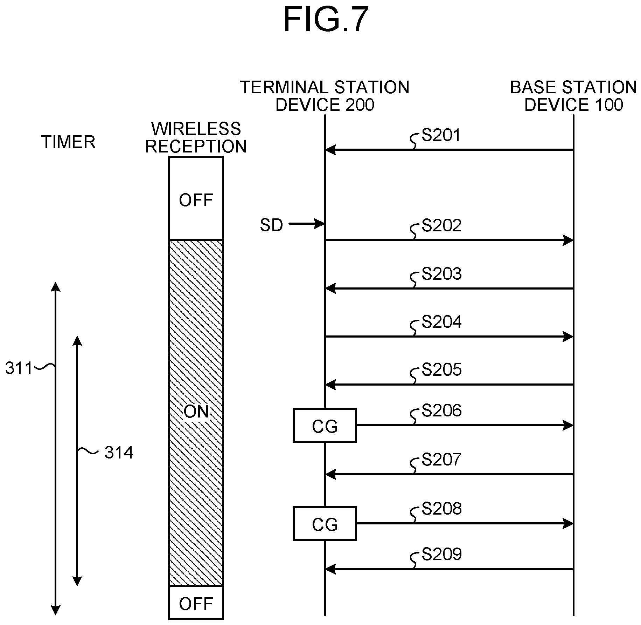

FIG. 7 is a sequence diagram illustrating another specific example of the wireless communication method according to the second embodiment. In FIG. 7, components that are the same as those illustrated in FIG. 6 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 7, the time duration for which the wireless receiving circuit included in the wireless communication unit 210 is turned on or off is illustrated.

When the base station device 100 transmits the control information including the duration configuring information (Step S201), the terminal station device 200 turns on the wireless receiving circuit in the duration that corresponds to, for example, the paging frame, and turns off the wireless receiving circuit after an elapse of the duration that corresponds to the paging frame. After that, if the small data SD to be transmitted from the terminal station device 200 is generated, the terminal station device 200 selects an optimum beam from the plurality of beams that are formed by the base station device 100, and transmits the MSG1 to the base station device 100 (Step S202). After the transmission of the MSG1, the terminal station device 200 turns on the wireless receiving circuit in order to receive the message corresponding to the MSG1.

The base station device 100 that receives the MSG1 transmits the MSG2 that includes therein the TA value and the Temporary C-RNTI to the terminal station device 200 (Step S203). The terminal station device 200 that receives the MSG2 that includes therein the TA value starts the time alignment timer 311. Furthermore, the terminal station device 200 holds the Temporary C-RNTI included in the MSG2 until the time alignment timer 311 is expired.

Then, the terminal station device 200 transmits the MSG3 to the base station device 100 (Step S204). At this time, the terminal station device 200 may include some of the small data SD into the MSG3 and transmit the MSG3. After the terminal station device 200 has transmitted the MSG3, the terminal station device 200 starts a contention resolution timer 314, and attempts to receive and detect the MSG4 until the contention resolution timer 314 is expired. At this time, the terminal station device 200 treats the contention resolution timer 314 as the timer corresponding to the timer 312 and the timer 313 described above, and turns on the wireless receiving circuit in the duration that is continued until the contention resolution timer 314 is expired (case 1). Alternatively, in order to separate the role of the timer, the terminal station device 200 may define the timer that is different from the contention resolution timer 314, and treat the subject timer as the timer corresponding to the timer 312 and the timer 313 described above. In this case, the terminal station device 200 turns on the wireless receiving circuit in the duration that is continued until the defined different timer is expired (case 2).

In the case 1, the terminal station device 200 may extend the setting time of the contention resolution timer 314 that starts its operation at the time of transmission of the MSG3, in accordance with the duration configuring information received at Step S201. Specifically, the setting time of the contention resolution timer 314 is extended by the length of time designated by the duration configuring information such that the contention resolution timer 314 is to be expired after an elapse of time for waiting to receive the control signal related to the PDCCH after the transmission of the radio resource CG. In addition, the maximum setting time of the contention resolution timer 314 is currently defined as 64 subframes (corresponding to 64 ms); however, it may be possible to set longer setting time to the contention resolution timer 314 as needed. When the terminal station device 200 starts the contention resolution timer 314, the terminal station device 200 turns on the wireless receiving circuit in the duration that is continued until the contention resolution timer 314 is expired. In the following, a description of the present embodiment will be continuously made based on the assumption that the setting time of the contention resolution timer 314 has been extended.

The base station device 100 that receives the MSG3 determines the radio resource CG that is used to transmit the small data SD performed by the terminal station device 200, and transmits the MSG4 that includes therein the setting information on the radio resource CG to the terminal station device 200 (Step S205). After the terminal station device 200 receives the MSG4, the terminal station device 200 transmits some of the small data SD to the base station device 100 by using the radio resource CG (Step S206) .

The base station device 100 that receives the small data SD from the terminal station device 200 transmits the control signal related to the PDCCH in accordance with the small data SD (Step S207). The terminal station device 200 turns on the wireless receiving circuit in the duration that is continued until the extended contention resolution timer 314 is expired, so that the terminal station device 200 is able to receive the control signal related to the PDCCH at Step S207.

After that, the terminal station device 200 uses the subsequent radio resource CG and transmits some of the rest of the small data SD to the base station device 100 (Step S208). The base station device 100 that receives the small data SD from the terminal station device 200 transmits the control signal related to the PDCCH in accordance with the small data SD (Step S209). The terminal station device 200 turns on the wireless receiving circuit in the duration that is continued until the extended contention resolution timer 314 is expired, so that the terminal station device 200 is able to receive the control signal related to the PDCCH at Step S209. Then, when the contention resolution timer 314 has been expired, the terminal station device 200 turns off the wireless receiving circuit.

In this way, in the example illustrated in FIG. 7, the setting time of the contention resolution timer 314 is extended, and the duration for which the wireless receiving circuit is turned on is continued until the control signals related to the PDCCH with respect to all of the plurality of radio resources CG are received. As a result, it is possible to further improve the efficiency of the control by suppressing the switching of on or off of the wireless receiving circuit as a result of preventing the wireless receiving circuit from being once turned on after the transmission of each of the radio resources CG.

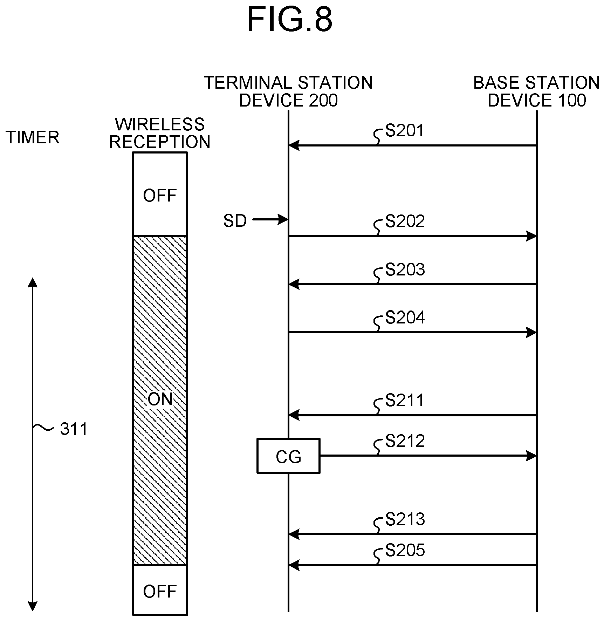

FIG. 8 is a sequence diagram illustrating still another specific example of the wireless communication method according to the second embodiment. In FIG. 8, components that are the same as those illustrated in FIG. 6 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 8, a time duration for which the wireless receiving circuit included in the wireless communication unit 210 is turned on or off is illustrated.

When the base station device 100 transmits the control information including the duration setting information (Step S201), the terminal station device 200 turns on the wireless receiving circuit in the duration that corresponds to, for example, the paging frame, and, when the duration that corresponds to the paging frame has elapsed, the terminal station device 200 turns off the wireless receiving circuit. After that, if the small data SD to be transmitted from the terminal station device 200 is generated, the terminal station device 200 selects an optimum beam from among the plurality of beams that are formed by the base station device 100, and sends the MSG1 to the base station device 100 (Step S202). After the terminal station device 200 has transmitted the MSG1, the terminal station device 200 turns on the wireless receiving circuit in order to receive the message that corresponds to the MSG1.

The base station device 100 that receives the MSG1 transmits the MSG2 that includes therein the TA value and the Temporary C-RNTI to the terminal station device 200 (Step S203). The terminal station device 200 that receives the MSG2 including the TA value starts the time alignment timer 311. Furthermore, the terminal station device 200 holds the Temporary C-RNTI included in the MSG2 until the time alignment timer 311 is expired.

Then, the terminal station device 200 transmits the MSG3 to the base station device 100 (Step S204). At this time, the terminal station device 200 may include some of the small data SD in the MSG3 and transmit the MSG3. Furthermore, the terminal station device 200 starts the contention resolution timer for waiting to receive the MSG4 at the time of the transmission of the MSG3, and turns on the wireless receiving circuit in the duration that is continued until the contention resolution timer is expired. In addition, the maximum setting time of the contention resolution timer is currently defined as 64 subframes (corresponding to 64 ms); however, it may be possible to set longer setting time to the contention resolution timer as needed.

The base station device 100 that receives the MSG3 determines the radio resource CG that is used by the terminal station device 200 to transmit the small data SD, and transmits resetting information (for example, RRC Reconfiguration) on the RRC layer including the setting information on the radio resource CG to the terminal station device 200 (Step S211). At this time, the base station device 100 sets the radio resource CG before the time at which the MSG4 is transmitted. Here, the radio resource CG is determined in a state in which an optimum beam has been selected by the terminal station device 200, so that an optimum radio resource CG is set. The radio resource CG may be set in a plurality of time domains.

After the terminal station device 200 receives the resetting information, the terminal station device 200 uses the radio resource CG that has been set to the time before the MSG4 is received, and then, transmits the small data SD to the base station device 100 (Step S212). The base station device 100 that receives the small data SD from the terminal station device 200 transmits the control signal related to the PDCCH in accordance with the small data SD (Step S213). At this time, the base station device 100 masks the PDCCH in accordance with the value of the Temporary C-RNTI included in the MSG2 and transmits the PDCCH. The terminal station device 200 turns on the wireless receiving circuit in the duration that is continued until the contention resolution timer for waiting to receive the MSG4 is expired, so that the terminal station device 200 is able to receive the control signal related to the PDCCH at Step S213. Furthermore, the terminal station device 200 holds the Temporary C-RNTI notified by the MSG2, so that the terminal station device 200 is able to decode the control signal that has been masked in accordance with the value of the Temporary C-RNTI.

After that, the base station device 100 transmits the MSG4 that corresponds to the MSG3 to the terminal station device 200 before the contention resolution timer included in the terminal station device 200 is expired (Step S205). When the contention resolution timer has been expired after the terminal station device 200 received the MSG4, the terminal station device 200 turns off the wireless receiving circuit.

In this way, in the example illustrated in FIG. 8, after the terminal station device 200 transmits the MSG3, the terminal station device 200 transmits the small data SD by using the radio resource CG, and then, receives the control signal related to the PDCCH before the contention resolution timer for waiting to receive the MSG4 is expired. Accordingly, the terminal station device 200 may perform monitoring on the PDCCH within a period of time between the transmission of the MSG3 and the reception of the MSG4, and does not need to set a new timer for waiting to receive the control signal related to the PDCCH with respect to the small data SD.

As described above, according to the present embodiment, after the small data has been generated, the radio resource for transmitting the small data is set by using the random access procedure performed by using four steps, and the duration for which the wireless receiving circuit included in the terminal station device is also continuously turned on after the transmission of the small data is provided. Accordingly, the terminal station device is able to receive the control signal that is in accordance with the transmission of the small data, is able to minimize the frequency in switching of on and off of the wireless receiving circuit, and is thus able to improve the efficiency of the data communication. Furthermore, the small data is transmitted by using the optimum radio resource that is set after the optimum beam has been selected, so that it is possible to improve the reception quality of the small data.

### Third Embodiment

In a third embodiment, a case in which the radio resource CG that is used to transmit the small data SD is set by using a random access procedure performed by using two steps will be described.

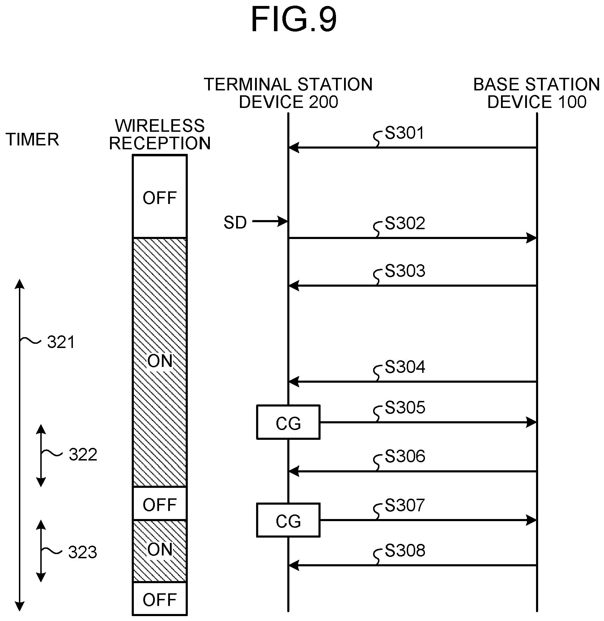

The configurations of the base station device 100 and the terminal station device 200 according to the third embodiment are the same as the configurations of the base station device 100 (FIG. 1) and the terminal station device 200 (FIG. 2) according to the first embodiment. FIG. 9 is a sequence diagram illustrating a specific example of a wireless communication method according to the third embodiment. Here, it is assumed that the terminal station device 200 is transitioned to the RRC inactive mode corresponding to a low electric power consumption state as a result of a decrease in the electric power supply to the wireless communication unit 210. In FIG. 9, a time duration for which the wireless receiving circuit included in the wireless communication unit 210 is turned on or off is illustrated.

The base station device 100 transmits the control information including the duration configuring information related to the setting of the duration that corresponds to the paging frame and the duration that corresponds to the communication of the small data (Step S301). The duration configuring information may include, for example, information on time at which the paging frame is provided, information on setting time of a timer that is started at the time of transmission of the small data, or the like. In addition, as the control information including the duration configuring information, for example, notification information on a MIB, a SIB, or the like, or individual control information on the RRC layer is used.

When the terminal station device 200 receives the duration configuring information, the terminal station device 200 turns on the wireless receiving circuit in the duration that corresponds to, for example, the paging frame, and receives the control signal, such as the PDCCH, related to the paging from the base station device 100. Then, the terminal station device 200 turns off the wireless receiving circuit after an elapse of the duration that corresponds to the paging frame.

After that, if the small data SD to be transmitted from the terminal station device 200 is generated, the terminal station device 200 selects an optimum beam from among the plurality of beams that are formed by the base station device 100, and transmits a message (MSGA) including a preamble corresponding to the selected beam to the base station device 100 (Step S302). At this time, the terminal station device 200 may include some of the small data SD in the MSGA and transmit the MSGA. The MSGA is a message that is integrally formed of the MSG1 and the MSG3 that are used in the random access procedure performed by using the four steps described in the second embodiment. After the terminal station device 200 has transmitted the MSGA, the terminal station device 200 turns on the wireless receiving circuit in order to receive the message that corresponds to the MSGA.

The base station device 100 that receives the MSGA determines the TA value that is used to adjust the transmission timing of the terminal station device 200, and allocates the Cell-Radio Network Temporary Identifier (C-RNTI) that corresponds to an identifier to the terminal station device 200. Then, the base station device 100 transmits the message (MSGB) including therein the TA value and the C-RNTI to the terminal station device 200 (Step S303). The MSGB is the message that is integrally formed of the MSG2 and the MSG4 that are used in the random access procedure performed by using the four steps described in the second embodiment; however, here, in the MSG4, the RRC Release w/ suspendConfig is not transmitted.

The terminal station device 200 that receives the MSGB including the TA value determines that synchronization of an uplink has been established, and starts a time alignment timer 321 that defines the synchronization duration time used in the uplink. After that, the processor 220 included in the terminal station device 200 is able to arbitrarily perform setting on and off of the wireless receiving circuit until the time alignment timer 321 is expired. Furthermore, the terminal station device 200 holds the C-RNTI included in the MSGB until the time alignment timer 321 is expired.

After the base station device 100 has transmitted the MSGB, the terminal station device 200 determines the radio resource CG that is used to transmit the small data SD, and transmits the individual control information including the configuring information on the radio resource CG to the terminal station device 200 (Step S304). The individual control information corresponds to RRC Release w/ suspendConfig. Here, the radio resource CG is determined in a state in which an optimum beam has been selected by the terminal station device 200, so that an optimum radio resource CG is set. The radio resource CG may be set in a plurality of time domains.

After the terminal station device 200 receives the individual control information, the terminal station device 200 transmits some of the small data SD to the base station device 100 by using the radio resource CG (Step S305). Furthermore, the terminal station device 200 starts a timer 322 that is used for the communication of the small data SD, in accordance with the duration configuring information received at Step S301, and turns on the wireless receiving circuit in the duration that is continued until the timer 322 is expired.

The base station device 100 that receives the small data SD from the terminal station device 200 transmits the control signal related to the PDCCH in accordance with the small data SD (Step S306). At this time, the base station device 100 masks the PDCCH in accordance with the value of the C-RNTI that is included in the MSGB and transmits the PDCCH. The terminal station device 200 turns on wireless receiving circuit in the duration that is continued until the timer 322 is expired, so that it is possible to receive the control signal related to the PDCCH at Step S306. Furthermore, the terminal station device 200 holds the C-RNTI notified by the MSGB, so that the terminal station device 200 is able to decode the control signal that has been masked in accordance with the value of the C-RNTI. Then, when the timer 322 has been expired, the terminal station device 200 turns off the wireless receiving circuit.

After that, the terminal station device 200 transmits some of the rest of the small data SD to the base station device 100 by using the subsequent radio resource CG (Step S307). Furthermore, the terminal station device 200 starts a timer 323 that is used for the communication of the small data SD in accordance with the duration configuring information received at Step S301, and turns on the wireless receiving circuit in the duration that is continued until the timer 323 is expired.

The base station device 100 that receives the small data SD from the terminal station device 200 transmits the control signal related to the PDCCH in accordance with the small data SD (Step S308). At this time, the base station device 100 masks the PDCCH in accordance with the value of the C-RNTI included in the MSGB and transmits the PDCCH. The terminal station device 200 turns on the wireless receiving circuit in the duration that is continued until the timer 323 is expired, so that the terminal station device 200 is able to receive the control signal related to the PDCCH at Step S308. Furthermore, the terminal station device 200 holds the C-RNTI notified by the MSGB, so that the terminal station device 200 is able to decode the control signal that has been masked in accordance with the value of the C-RNTI. Then, when the timer 323 has been expired, the terminal station device 200 turns off the wireless receiving circuit.

In this way, in the example illustrated in FIG. 9, the timers 322 and 323 are started every time the small data SD is transmitted by using the radio resource CG, and the duration for which the wireless receiving circuit is turned on is continued until the timers 322 and 323 are expired. Consequently, the terminal station device 200 is able to reliably receive the control signal related to the PDCCH with respect to the small data SD even if the terminal station device 200 is in the RRC inactive mode.

In addition, here, it is assumed that the small data SD is transmitted by using the radio resource CG twice; however, the radio resource CG may be set three times or more, and the small data SD may be transmitted by using each of the radio resources CG. Furthermore, if it is possible to transmit the small data SD by using the radio resource CG one time, there is no need to transmit the small data SD at Step S208. In this case, instead of the small data SD, it may be possible to transmit, for example, buffer status information (BSR) indicating the status of the buffer in the terminal station device 200 by using the radio resource CG.

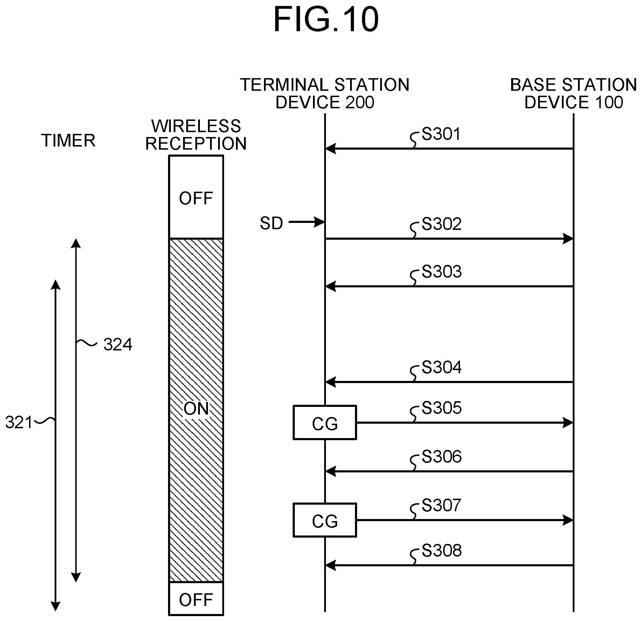

FIG. 10 is a sequence diagram illustrating another specific example of the wireless communication method according to the third embodiment. In FIG. 10, components that are the same as those illustrated in FIG. 9 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 10, the time duration for which the wireless receiving circuit included in the wireless communication unit 210 is turned on or off is illustrated.

When the base station device 100 transmits the control information including the duration configuring information (Step S301), the terminal station device 200 turns on the wireless receiving circuit in the duration that corresponds to, for example, the paging frame, and turns off the wireless receiving circuit after an elapse of the duration that corresponds to the paging frame. After that, if the small data SD to be transmitted from the terminal station device 200 is generated, the terminal station device 200 selects an optimum beam from among the plurality of beams that are formed by the base station device 100, and transmits the MSGA to the base station device 100 (Step S302). At this time, the terminal station device 200 may include some of the small data SD in the MSGA and transmits the MSGA.

After the terminal station device 200 has transmitted the MSGA, the terminal station device 200 starts a response window (msgB-ResponseWindow) 324, and attempts to receive and detect the MSGB until the response window 324 is closed. At this time, the terminal station device 200 treats the response window 324 as a timer that is equivalent to the timer 322 and the timer 323 described above, and turns on the wireless receiving circuit in the duration that is continued until the response window 324 is closed (case 1). Alternatively, in order to separate the role of the timer, the terminal station device 200 may define another timer that is different from the response window 324, and may treat that timer as the timer that is equivalent to the timer 322 and the timer 323 described above. In this case, the terminal station device 200 turns on the wireless receiving circuit in the duration that is continued until the other defined timer is expired (case 2).

In the case 1, the terminal station device 200 may expand the setting time of the response window 324 for waiting to receive the MSGB, in accordance with the duration configuring information that has been received at Step S301. Specifically, the setting time of the response window 324 is expanded by the length of time that is designated by the duration configuring information such that the response window 324 is to be closed after an elapse of time for which the control signal related to the PDCCH is waited after the transmission of the radio resource CG. In addition, the maximum setting time of the response window 324 for the MSGB is currently defined as 1320 slots; however, it may be possible to configure such that longer setting time is set to the response window 324. When the response window 324 is started, the terminal station device 200 turns on the wireless receiving circuit in the duration that is continued until the response window 324 is closed. In the following, a description of the present embodiment will be continuously made based on the assumption that the setting time of the response window 324 has been extended.

The base station device 100 that receives the MSGA transmits the MSGB including the TA value and the C-RNTI to the terminal station device 200 (Step S303). The terminal station device 200 that receives the MSGB including the TA value starts the time alignment timer 321. Furthermore, the terminal station device 200 holds the C-RNTI included in the MSGB until the time alignment timer 321 is expired.

After the base station device 100 has transmitted the MSGB, the base station device 100 determines the radio resource CG that is used by the terminal station device 200 to transmit the small data SD, and transmits the individual control information including the configuring information on the radio resource CG to the terminal station device 200 (Step S304). After the terminal station device 200 has received the individual control information, the terminal station device 200 transmits some of the small data SD to the base station device 100 by using the radio resource CG (Step S305).

The base station device 100 that receives the small data SD from the terminal station device 200 transmits the control signal related to the PDCCH in accordance with the small data SD (Step S306). The terminal station device 200 turns on the wireless receiving circuit in the duration that is continued until the expanded response window 324 is closed, so that the terminal station device 200 is able to receive the control signal related to the PDCCH at Step S306.

After that, the terminal station device 200 transmits some of the rest of the small data SD to the base station device 100 by using the subsequent radio resource CG (Step S307). The base station device 100 that receives the small data SD from the terminal station device 200 transmits the control signal related to the PDCCH in accordance with the small data SD (Step S308). The terminal station device 200 turns on the wireless receiving circuit in the duration that is continued until the expanded response window 324 is closed, so that the terminal station device 200 is able to receive the control signal related to the PDCCH at Step S308. Then, when the response window 324 is closed, the terminal station device 200 turns off the wireless receiving circuit.

In this way, in the example illustrated in FIG. 10, the setting time of the response window 324 that is used for the MSGB is expanded, and the duration for which the wireless receiving circuit is turned on is continued until the control signals related to the PDCCH with respect to all of the plurality of radio resources CG are received. As a result, it is possible to further improve the efficiency of the control by suppressing the switching of on or off of the wireless receiving circuit as a result of preventing the wireless receiving circuit from being once turned on after the transmission of each of the radio resource CG.

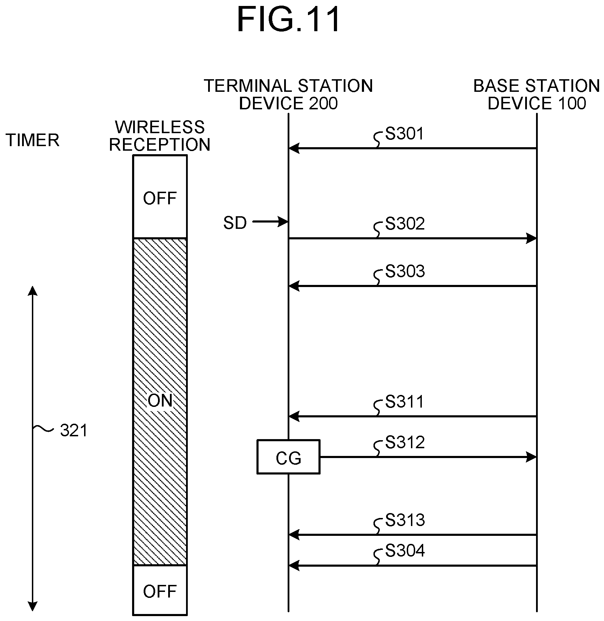

FIG. 11 is a sequence diagram illustrating still another specific example of the wireless communication method according to the third embodiment. In FIG. 11, components that are the same as those illustrated in FIG. 9 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 11, a time duration for which the wireless receiving circuit included in the wireless communication unit 210 is turned on or off is illustrated.

When the base station device 100 transmits the control information including the duration configuring information (Step S301), the terminal station device 200 turns on the wireless receiving circuit in the duration that corresponds to, for example, the paging frame, and turns off the wireless receiving circuit after an elapse of the duration that corresponds to the paging frame. After that, if the small data SD to be transmitted from the terminal station device 200 is generated, the terminal station device 200 selects an optimum beam from among the plurality of beams that are formed by the base station device 100, and transmits the MSGA to the base station device 100 (Step S302). At this time, the terminal station device 200 may include some of the small data SD in the MSGA and transmit the MSGA. Furthermore, the terminal station device 200 starts the response window for waiting to receive the MSGB at the time of transmission of the MSGA, and turns on the wireless receiving circuit in the duration that is continued until the response window is closed. In addition, the maximum setting time of the response window is currently defined as 1320 slots; it may be possible to configure such that longer setting time is set to the response window.

The base station device 100 that receives the MSGA transmits the MSGB including the TA value and the C-RNTI to the terminal station device 200 (Step S303). However, in the MSGB, the RRC Release w/ suspendConfig is not transmitted. The terminal station device 200 that receives the MSGB including the TA value starts the time alignment timer 321. Furthermore, the terminal station device 200 holds the C-RNTI included in the MSGB until the time alignment timer 321 has been expired.

After the base station device 100 has transmitted the MSGB, the base station device 100 determines the radio resource CG that is used by the terminal station device 200 to transmit the small data SD, and transmits the reconfiguring information (for example, RRC Reconfiguration) on the RRC layer including the configuring information on the radio resource CG to the terminal station device 200 (Step S311). At this time, the base station device 100 sets the radio resource CG by the time at which the individual control information corresponding to the MSG4 is transmitted. Here, the radio resource CG is determined in a state in which the optimum beam has been selected by the terminal station device 200, so that an optimum radio resource CG is set. The radio resource CG may be configured in a plurality of time domains.

After the terminal station device 200 has received the reconfiguring information, the terminal station device 200 transmits the small data SD to the base station device 100 by using the radio resource CG that is set at the time before the individual control information is received (Step S312). The base station device 100 that receives the small data SD from the terminal station device 200 transmits the control signal related to the PDCCH in accordance with the small data SD (Step S313). At this time, the base station device 100 masks the PDCCH in accordance with the value of the C-RNTI included in the MSGB and transmits the PDCCH. The terminal station device 200 turns on the wireless receiving circuit in the duration that is continued until the response window that waits to receive the MSGB is closed, so that the terminal station device 200 is able to receive the control signal related to the PDCCH at Step S313. Furthermore, the terminal station device 200 holds the C-RNTI notified by the MSGB, so that the terminal station device 200 is able to decode the control signal that has been masked in accordance with the value of the C-RNTI.

After that, the base station device 100 transmits the individual control information corresponding to the MSG4 to the terminal station device 200 by the time at which the response window included in the terminal station device 200 is closed (Step S304). After the terminal station device 200 has received the individual control information, when the response window is closed, the terminal station device 200 turns off the wireless receiving circuit.

In this way, in the example illustrated in FIG. 11, after the terminal station device 200 has transmitted the MSGA, the terminal station device 200 transmits the small data SD by using the radio resource CG and receives the control signal related to the PDCCH by the time at which the response window that is used to wait to receive the MSGB is closed. Accordingly, the terminal station device 200 may perform monitoring on the PDCCH within a period of time between the transmission of the MSGA and the reception of the RRC Release w/ suspendConfig that is the individual control information corresponding to the MSG4, and does not need to set a new timer for waiting to receive the control signal related to the PDCCH with respect to the small data SD.

As described above, according to the present embodiment, after the small data has been generated, the radio resource used for transmitting the small data is set by using the individual control information, and the duration for which the wireless receiving circuit included in the terminal station device is also continuously turned on after the transmission of the small data. Accordingly, the terminal station device is able to receive the control signal that is in accordance with the transmission of the small data, is able to minimize the frequency in switching of on and off of the wireless receiving circuit, and is thus able to improve the efficiency of the data communication. Furthermore, the small data is transmitted by using the optimum radio resource that is set after the optimum beam has been selected, so that it is possible to improve the reception quality of the small data.

### Fourth Embodiment

In a fourth embodiment, another case in which radio resource CG that is used to transmit the small data SD is set by using a process of a random access procedure performed by using two steps will be described.

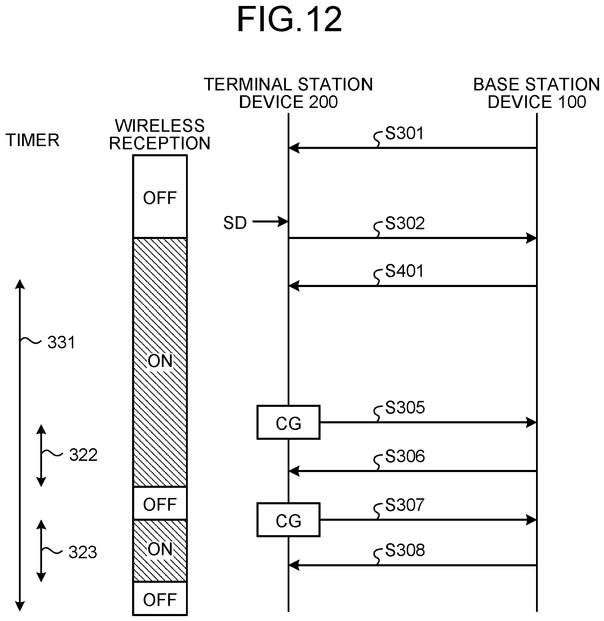

The configurations of the base station device 100 and the terminal station device 200 according to the fourth embodiment are the same as the configurations of the base station device 100 (FIG. 1) and the terminal station device 200 (FIG. 2) according to the first embodiment. FIG. 12 is a sequence diagram illustrating a specific example of a wireless communication method according to the fourth embodiment. In FIG. 12, components that are the same as those illustrated in FIG. 9 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 12, a time duration for which the wireless receiving circuit included in the wireless communication unit 210 is turned on or off is illustrated.

When the base station device 100 transmits the control information including the duration configuring information (Step S301), the terminal station device 200 turns on the wireless receiving circuit in the duration that corresponds to, for example, the paging frame, and turns off the wireless receiving circuit after an elapse of the duration that corresponds to the paging frame. After that, if the small data SD to be transmitted from the terminal station device 200 is generated, the terminal station device 200 selects an optimum beam from among the plurality of beams that are formed by the base station device 100, and transmits the MSGA to the base station device 100 (Step S302). At this time, the terminal station device 200 may include some of the small data SD in the MSGA and transmits the MSGA. After the terminal station device 200 has transmitted the MSGA, the terminal station device 200 turns on the wireless receiving circuit in order to receive the message that corresponds to the MSGA.

The base station device 100 that receives the MSGA determines the TA value that is used to adjust the transmission timing of the terminal station device 200, and allocates the C-RNTI that is an identifier to the terminal station device 200. Furthermore, the base station device 100 determines the radio resource CG that is used by the terminal station device 200 to transmit the small data SD, and transmits the message (MSGB) including the TA value and the C-RNTI, as well as the configuring information on the radio resource CG, to the terminal station device 200 (Step S401). The MSGB is the message that is integrally formed of the MSG2 and the MSG4 used in the process of the random access procedure performed by using four steps as described above in the second embodiment.

The terminal station device 200 that receives the MSGB including the TA value determines that synchronization of an uplink has been established, and starts a time alignment timer 331 that defines the synchronization duration time used in the uplink. After that, the processor 220 included in the terminal station device 200 is able to arbitrarily perform setting of on and off of the wireless receiving circuit until the time alignment timer 331 is expired. Furthermore, the terminal station device 200 holds the C-RNTI included in the MSGB until the time alignment timer 331 is expired.

After the terminal station device 200 has received the MSGB, the terminal station device 200 transmits some of the small data SD to the base station device 100 by using the radio resource CG (Step S305). Furthermore, the terminal station device 200 starts the timer 322 that is used for communication of the small data SD, in accordance with the duration configuring information received at Step S301, and the terminal station device 200 turns on the wireless receiving circuit in the duration that is continued until the timer 322 is expired.

The base station device 100 that receives the small data SD from the terminal station device 200 transmits the control signal related to the PDCCH in accordance with the small data SD (Step S306). At this time, the base station device 100 masks the PDCCH in accordance with the value of the C-RNTI included in the MSGB, and transmits the MSGB. The terminal station device 200 turns on the wireless receiving circuit in the duration that is continued until the timer 322 is expired, so that the terminal station device 200 is able to receive the control signal related to the PDCCH at Step S306. Furthermore, the terminal station device 200 holds the C-RNTI notified by the MSGB, the terminal station device 200 is able to decode the control signal that has been masked in accordance with the value of the C-RNTI. Then, when the timer 322 is expired, the terminal station device 200 turns off the wireless receiving circuit.

After that, the terminal station device 200 transmits some of the rest of the small data SD to the base station device 100 by using the subsequent radio resource CG (Step S307). Furthermore, the terminal station device 200 starts the timer 323 that is related to communication of the small data SD, in accordance with the duration configuring information received at Step S301, and turns on the wireless receiving circuit in the duration that is continued until the timer 323 is expired.

The base station device 100 that receives the small data SD from the terminal station device 200 transmits the control signal related to the PDCCH in accordance with the small data SD (Step S308). At this time, the base station device 100 masks the PDCCH in accordance with the value of the C-RNTI included in the MSGB and transmits the MSGB. The terminal station device 200 turns on the wireless receiving circuit in the duration that is continued until the timer 323 is expired, so that the terminal station device 200 is able to receive the control signal related to the PDCCH at Step S308. Furthermore, the terminal station device 200 holds the C-RNTI notified by the MSGB, so that the terminal station device 200 is able to decode the control signal that has been masked in accordance with the value of the C-RNTI. In addition, when the timer 323 is expired, the terminal station device 200 turns off the wireless receiving circuit.

In this way, in the example illustrated in FIG. 12, the timers 322 and 323 are started every time the small data SD is transmitted by using the radio resource CG, and the duration for which the wireless receiving circuit is turned on is continued until the timers 322 and 323 are expired. Consequently, the terminal station device 200 is able to reliably receive the control signal related to the PDCCH with respect to the small data SD even if the terminal station device 200 is in the RRC inactive mode.

In addition, here, it is assumed that the small data SD is transmitted by using the radio resource CG twice; however, the radio resource CG may be configured three times or more, and the small data SD may be transmitted by using each of the radio resources CG. Furthermore, if it is possible to transmit the small data SD by using the radio resource CG one time, there is no need to transmit the small data SD at Step S208. In this case, instead of the small data SD, for example, it may be possible to transmit buffer status information (BSR) indicating the status of the buffer in the terminal station device 200 by using the radio resource CG.

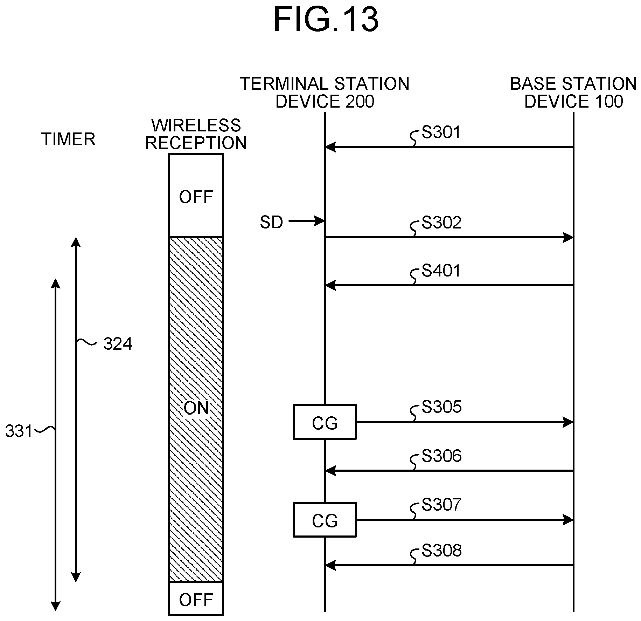

FIG. 13 is a sequence diagram illustrating another specific example of the wireless communication method according to the fourth embodiment. In FIG. 13, components that are the same as those illustrated in FIGS. 9 and 12 are assigned the same reference numerals and descriptions thereof in detail will be omitted. Here, it is assumed that the terminal station device 200 is transitioned to the RRC inactive mode corresponding to a low electric power consumption state as a result of a decrease in the electric power supply to the wireless communication unit 210. In FIG. 13, the time duration for which the wireless receiving circuit included in the wireless communication unit 210 is turned on or off is illustrated.

When the base station device 100 transmits the control information including the duration configuring information (Step S301), the terminal station device 200 turns on the wireless receiving circuit in the duration that corresponds to, for example, the paging frame, and turns off the wireless receiving circuit after an elapse of the duration that corresponds to the paging frame. After that, if the small data SD to be transmitted from the terminal station device 200 is generated, the terminal station device 200 selects an optimum beam from among the plurality of beams that are formed by the base station device 100, and transmits the MSGA to the base station device 100 (Step S302). At this time, the terminal station device 200 may include some of the small data SD in the MSGA and transmits the MSGA.

After the terminal station device 200 has transmitted the MSGA, the terminal station device 200 starts the response window 324, and attempts to detect whether the MSGB has been received until the response window 324 is closed. At this time, the terminal station device 200 treats the response window 324 as the timer corresponding to the timer 322 and the timer 323 described above, and turns on the wireless receiving circuit in the duration that is continued until the response window 324 is closed (case 1). Alternatively, in order to separate the role of the timer, the terminal station device 200 may define that is different from the response window 324, and may treat that timer as the timer that is equivalent to the timer 322 and the timer 323 described above. In this case, the terminal station device 200 turns on the wireless receiving circuit in the duration that is continued until the other defined timer is expired (case 2).

In the case 1, the terminal station device 200 may expand the setting time of the response window 324 for waiting to receive the MSGB, in accordance with the duration configuring information that has been received at Step S301. When the response window 324 is started, the terminal station device 200 turns on the wireless receiving circuit in the duration that is continued until the response window 324 is closed. In the following, a description of the present embodiment will be continuously made based on the assumption that the setting time of the response window 324 has been extended.

The base station device 100 that receives the MSGA transmits the MSGB that includes the TA value and the C-RNTI and that also includes the configuring information on the radio resource CG to the terminal station device 200 (Step S401). The terminal station device 200 that receives the MSGB including the TA value starts the time alignment timer 321. Furthermore, the terminal station device 200 holds the C-RNTI included in the MSGB until the time alignment timer 321 is expired.

After the terminal station device 200 has received the MSGB, the terminal station device 200 transmits some of the small data SD to the base station device 100 by using the radio resource CG (Step S305). The base station device 100 that receives the small data SD from the terminal station device 200 transmits the control signal related to the PDCCH in accordance with the small data SD (Step S306). The terminal station device 200 turns on the wireless receiving circuit in the duration that is continued until the expanded response window 324 is closed, so the terminal station device 200 is able to receive the control signal related to the PDCCH at Step S306.

After that, the terminal station device 200 transmits some of the rest of the small data SD to the base station device 100 by using the subsequent radio resource CG (Step S307). The base station device 100 that receives the small data SD from the terminal station device 200 transmits the control signal related to the PDCCH in accordance with the small data SD (Step S308). The terminal station device 200 turns on the wireless receiving circuit in the duration that is continued until the expanded response window 324 is closed, so that the terminal station device 200 is able to receive the control signal related to the PDCCH at Step S308. Then, when the response window 324 has been closed, the terminal station device 200 turns off the wireless receiving circuit.

In this way, in the example illustrated in FIG. 13, the setting time of the response window 324 for the MSGB is expanded, and the duration for which the wireless receiving circuit is turned on is continued until the control signal related to the PDCCH with respect to all of the plurality of radio resources CG. As a result, it is possible to further improve the efficiency of the control by suppressing the switching of on or off of the wireless receiving circuit as a result of preventing the wireless receiving circuit from being once turned on after the transmission of each of the radio resource CG.

As described above, according to the present embodiment, after the small data is generated, the radio resource for transmitting the small data by using the random access procedure performed by using two steps is set, and the duration for which the wireless receiving circuit included in the terminal station device is continuously turned on after the small data has been transmitted. Accordingly, the terminal station device is able to receive the control signal that is in accordance with the transmission of the small data, is able to minimize the frequency in switching of on and off of the wireless receiving circuit, and is thus able to improve the efficiency of the data communication. Furthermore, the small data is transmitted by using the optimum radio resource that is set after the optimum beam has been selected, so that it is possible to improve the reception quality of the small data.

In addition, in the fourth embodiment described above, similarly to the third embodiment (FIG. 11), the terminal station device 200 is able to transmit the small data SD by using the radio resource CG and receive the control signal related to the PDCCH by the time at which the response window that is used to wait to receive the MSGB is closed.

### Other Embodiments

Technical matters common to each of the embodiments described above will be exemplified. In each of the embodiments described above, it is assumed that, in the case where the small data SD to be transmitted is generated in the terminal station device 200, the small data SD is transmitted by using the radio resource CG. Here, in the case where the small data SD is generated is a case where data with, for example, a predetermined type is generated, a case where the size of the generated data satisfies a determination criterion for small data, or the like. Furthermore, wireless quality is also important; therefore, the case where the small data SD is generated may include a condition that the wireless quality is satisfied to transmit, for example, the MSG1, the MSGA, and the like. The terminal station device 200 performs communication related to transmission of the small data SD in accordance with a performance state of data communication performed on the basis of the presence or absence of generation of various kinds of the small data SD described above.

In terms of electric power consumption, a difference between a setting method in which on and off of the wireless receiving circuit illustrated in FIG. 6, FIG. 9, and FIG. 12 is repeated (setting 1), and a setting method in which the durations for which the wireless receiving circuit illustrated in FIG. 7, FIG. 8, FIG. 10, FIG. 11, and FIG. 13 are aggregated (setting 2) will be described. In the setting 1, in a case in which on and off are repeated in a long period of time, electric power consumption is increased at the starting up of an on duration, so that the electric power consumption is greater than that in the setting 2. However, the electric power consumption is decreased in an off-duration and monitoring of the PDCCH that is a downlink control signal is not performed, so that, in terms of a process performed on the control signal, it is possible to decrease the electric power consumption, which is an advantage. In contrast, in the setting 2, it is possible to decrease the electric power consumption at the starting up of the on-duration, the electric power consumption is smaller than that in the setting 1. However, monitoring of the PDCCH is performed in the on-duration, so that the electric power consumption is increased in terms of the process of the control signal, which is a disadvantage. It is preferable to use, for each purpose, setting of the on-duration and the off-duration using the setting 1 and 2 in consideration of the advantage and the disadvantage described above.

In each of the embodiments described above, management of subnormal communication (for example, various kinds of failure) may be provided. For example, if transmission fails in the radio link control (RLC) layer during communication of small data and the maximum retransmission count reaches a predetermined threshold, radio link failure (RLF) occurs. However, originally, in small data communication performed at the time of the RRC inactive mode, it is difficult to perform communication using an optimum parameter (for example, uplink transmission electric power, a radio resource, a transmission timing, etc.), and, in some cases, the number of times of retransmission using the RLC layer is increased. Accordingly, in the small data communication performed in the RRC inactive mode, a configuration may be constituted such that it is determined that the RLF does not occur even if the maximum retransmission count reaches the predetermined threshold.

In addition, in each of the embodiments described above, the length of each of the time alignment timers 311, 321, and 331 needs to be carefully set. If it is defined that the radio resource CG is released in the case where these time alignment timers are expired, it is difficult to transmit the small data because the radio resource CG has been released even if the terminal station device 200 desires to continue transmission of the small data after the time alignment timer has been expired. Thus, it is preferable that the set time of the time alignment timer is increased to some extent and the transmission of the small data is allowed to be continuously available. However, there may be a possibility that it is still difficult to transmit the small data as a result of an increase in the set time of the time alignment timer.

As one of the methods for fundamentally solving this circumstances, there is a method in which the base station device 100 periodically transmits a TA command including the TA value to the terminal station device 200 and allows the time alignment timer included in the terminal station device 200 to be restarted. For example, in a case where a configuration is constituted such that the base station device 100 transmits the TA command at an interval of the paging in consideration of a decrease in electric power consumption of the terminal station device 200, the set time of the time alignment timer described above is preferably set to be equal to or greater than the interval of the paging. Furthermore, it is preferable that the base station device 100 transmits the TA command before the time alignment timer included in the terminal station device 200 is expired regardless whether or not the electric power consumption of the terminal station device 200 is decreased.

Furthermore, each of the embodiments described above may also be used in any appropriate combination. For example, it may be possible to set a duration for which the terminal station device 200 turns on the wireless receiving circuit and monitors the PDCCH by using, in combination, the various timers, the contention resolution timer, and the response window described above in each of the embodiments. In this case, it may be possible to set the duration for which the PDCCH is monitored in accordance with, for example, the maximum value or the minimum value of the length of time used for the various timers and the window that are set at the same time.

### Reference Signs List

- 110: network IF
- 120, 220: processor
- 130, 230: memory
- 140, 210: wireless communication unit

## Claims

1. A base station device comprising:
a transmitter configured to perform communication when a terminal station device associated with the base station device is in a predetermined state; and
a controller configured to
configure, regarding setting that is related to a region in which a control signal for the communication performed by the terminal station device is decoded and that is related to a duration in which the region becomes available, a duration that corresponds to first communication and a duration that corresponds to second communication out of the communication, and
control the terminal station device so as to cause the terminal station device to perform the communication by intermittently using each of the durations.

2. The base station device according to claim 1, wherein the controller performs the setting related to the duration in which the region becomes available by causing the transmitter to transmit a master information block (MIB) or a system information block (SIB).

3. The base station device according to claim 1, wherein the controller performs the setting related to the duration in which the region becomes available by causing the transmitter to transmit individual control information on a radio resource control (RRC) layer.

4. The base station device according to claim 1, wherein
the first communication is communication of paging, and
the second communication is communication of small data.

5. A terminal station device comprising:
a transmitter configured to perform communication with a base station device associated with the terminal station device when the terminal station device is in a predetermined state; and
a controller configured to
receive, regarding setting that is related to a region in which a control signal for the communication is decoded and that is related to a duration in which the region becomes available, setting of, performed by the base station device, a duration that corresponds to first communication and a duration that corresponds to second communication out of the communication, and
control the communication performed by intermittently using each of the durations in accordance with a state of data communication to be performed.

6. The terminal station device according to claim 5, wherein
the controller
turns on a wireless receiving circuit included in the transmitter in the duration that corresponds to the first communication that is periodically performed, and
turns on the wireless receiving circuit included in the transmitter in the duration that corresponds to the second communication including transmission of data.

7. The terminal station device according to claim 6, wherein the controller continuously turns on the wireless receiving circuit included in the transmitter in a period of time between the duration that corresponds to the first communication and the duration that corresponds to the second communication.

8. The terminal station device according to claim 5, wherein, when a radio resource has been allocated by a random access procedure including transmission and reception of four messages of a first message to a fourth message, the controller turns on the wireless receiving circuit included in the transmitter in a set duration located after data has been transmitted by using the radio resource.

9. The terminal station device according to claim 8, wherein
the controller
starts, after the third message out of the four messages has been transmitted, a timer for waiting to receive the fourth message, and
continuously turns on the wireless receiving circuit included in the transmitter in a period of time between the start of the timer and the set duration.

10. The terminal station device according to claim 5, wherein, during a random access procedure including transmission and reception of four messages of a first message to a fourth message,
the controller
starts, after the third message out of the four messages has been transmitted, a timer for waiting to receive the fourth message, and
causes the transmitter to transmit data as a result of a radio resource being allocated before the timer is expired.

11. The terminal station device according to claim 5, wherein, when a radio resource has been allocated by a random access procedure including transmission and reception of two messages of a the first message and a second message, turns on the wireless receiving circuit included in the transmitter in a set duration located after data has been transmitted by using the radio resource.

12. The terminal station device according to claim 11, wherein
the controller
starts, after the first message has been transmitted, a timer for waiting to receive the second message, and
continuously turns on the wireless receiving circuit included in the transmitter in a period of time between the start of the timer and the set duration.

13. The terminal station device according to claim 5, wherein, during a random access procedure including transmission and reception of two messages of a first message and a second message,
the controller
starts, after the first message has been transmitted, a timer for waiting to receive the second message, and
causes the transmitter to transmit data as a result of a radio resource being allocated before the timer is expired.

14. A wireless communication system comprising:
a terminal station device; and
a base station device, wherein
the base station device includes
a transmitter configured to perform communication when the terminal station device is in a predetermined state, and
a controller configured to
configure, regarding setting that is related to a region in which a control signal for the communication performed by the terminal station device is decoded and that is related to a duration in which the region becomes available, a duration that corresponds to first communication and a duration that corresponds to second communication out of the communication, and
control the terminal station device so as to cause the terminal station device to perform the communication by intermittently using each of the durations.

15. A wireless communication method performed by a base station device that includes a transmitter and a controller, the wireless communication method comprising:
performing communication when a terminal station device associated with the base station device is in a predetermined state;
setting, regarding setting that is related to a region in which a control signal for the communication performed by the terminal station device is decoded and that is related to a duration in which the region becomes available, a duration that corresponds to first communication and a duration that corresponds to second communication out of the communication; and
controlling the terminal station device so as to cause the terminal station device to perform the communication by intermittently using each of the durations.
